# FASCICULE DE BREVET EUROPEEN

(11) **EP 1 124 042 B1**
(45) Date de publication et mention de la délivrance du brevet: **23.03.2005**
(21) Numéro de dépôt: 01400224.0
(22) Date de dépôt: 29.01.2001
(51) Int. Cl.: F01N 9/00, F02D 41/26

(54) **Système d'aide à la régénération d'un filtre à particules intégré dans une ligne d'échappement d'un moteur Diesel**
Steuerungssystem für die Regenerierung eines Partikelfilters für den Auspuff eines Dieselmotors
Regeneration control system for a diesel engine exhaust particulate filter

(30) Priorité: 09.02.2000 FR 0001607
(43) Date de publication de la demande: 16.08.2001
(73) Titulaire: Peugeot Citroen Automobiles SA, 92200 Neuilly sur Seine (FR)
(72) Inventeur: Aioun, François, 91190 Gif sur Yvette (FR); Bourguin, Solenne, 75008 Paris (FR)
(74) Mandataire: Habasque, Etienne Joel Jean-François

(56) Documents cités:
- EP-A- 0 196 421
- FR-A- 2 760 044
- FR-A- 2 774 421
- US-A- 5 671 141
- LANGKABEL G I: "LA PLUS GRANDE INVENTION DEPUIS LE MOTEUR DIESEL" REVUE AUTOMOBILE,CH,HALLWAG S.A. BERNE, vol. 94, no. 19, 6 mai 1999 (1999-05-06), page 21 XP000825692 ISSN: 0035-0761
- AZIZ A ET AL: "SUPERVISORY CONTROL OF FINITE STATE MACHINES" COMPUTER AIDED VERIFICATION. INTERNATIONAL CONFERENCE,XX,XX, 3 juillet 1995 (1995-07-03), pages 279-292, XP000604449

## Description

La présente invention concerne un système d'aide à la régénération d'un filtre à particules intégré dans une ligne d'échappement d'un moteur Diesel de véhicule automobile.

On sait que la réduction des émissions polluantes liées au fonctionnement des moteurs des véhicules automobiles et en particulier des moteurs Diesel est un souci permanent des constructeurs.

Différents systèmes ont déjà été développés dans l'état de la technique pour réduire le niveau de ces émissions polluantes en particulier en utilisant un filtre à particules intégré dans la ligne d'échappement.

On pourra par exemple se reporter au document LANGKABEL G.I: LA PLUS GRANDE INVENTION DEPUIS LE MOTEUR DIESEL, REVUE AUTOMOBILE, CH, HALLWAG S.A. BERNE, volume 94, n° 19, 6 mai 1999 (1999-05-06), page 21, qui décrit un système conforme au préambule de la revendication 1.

Cependant, la gestion du fonctionnement de celui-ci et en particulier la gestion de sa régénération génère encore des difficultés.

Le but de l'invention est donc de les résoudre.

A cet effet, l'invention a pour objet un système d'aide à la régénération d'un filtre à particules intégré dans une ligne d'échappement d'un moteur Diesel de véhicule automobile, comportant différents organes associés au moteur, parmi lesquels :
- des moyens d'admission d'air dans le moteur,
- des moyens de recyclage de gaz d'échappement du moteur en entrée de celui-ci,
- un turbocompresseur,
- un catalyseur d'oxydation disposé en amont du filtre à particules dans la ligne d'échappement ;
- un système d'alimentation commune en carburant des cylindres du moteur, comportant des injecteurs à commande électrique, associés à ces cylindres,
- des moyens d'ajout au carburant d'un additif destiné à se déposer sur le filtre à particules pour abaisser la température de combustion des particules piégées dans celui-ci,
- des moyens d'acquisition d'informations relatives à différents paramètres de fonctionnement du moteur et des organes associés à celui-ci, caractérisé en ce qu'il comporte des moyens de contrôle du fonctionnement des moyens d'admission, des moyens de recyclage, du turbocompresseur et/ou du système d'alimentation pour piloter le fonctionnement du moteur, ces moyens étant en outre adaptés pour déclencher une phase de régénération du filtre à particules par combustion des particules piégées dans celui-ci en enclenchant une phase d'injections multiples de carburant dans les cylindres du moteur pendant leur phase de détente, et en ce que les moyens de contrôle se présentent sous la forme d'un superviseur à automates d'états synchronisés lors de transitions d'états, dont au moins un premier automate de détermination de l'état du filtre à particules et un second automate de gestion et de pilotage du déclenchement et du déroulement de la phase d'aide à la régénération, les états de ces automates étant ordonnés séquentiellement.

L'invention sera mieux comprise à la lecture de la description qui va suivre, donnée uniquement à titre d'exemple et faite en se référant aux dessins annexés sur lesquels :
- la Fig.1 représente un schéma synoptique illustrant un moteur Diesel de véhicule automobile, et les différents organes associés à celui-ci, et
- la Fig.2 illustre la structure de moyens de contrôle du fonctionnement de ce moteur et de ces organes.

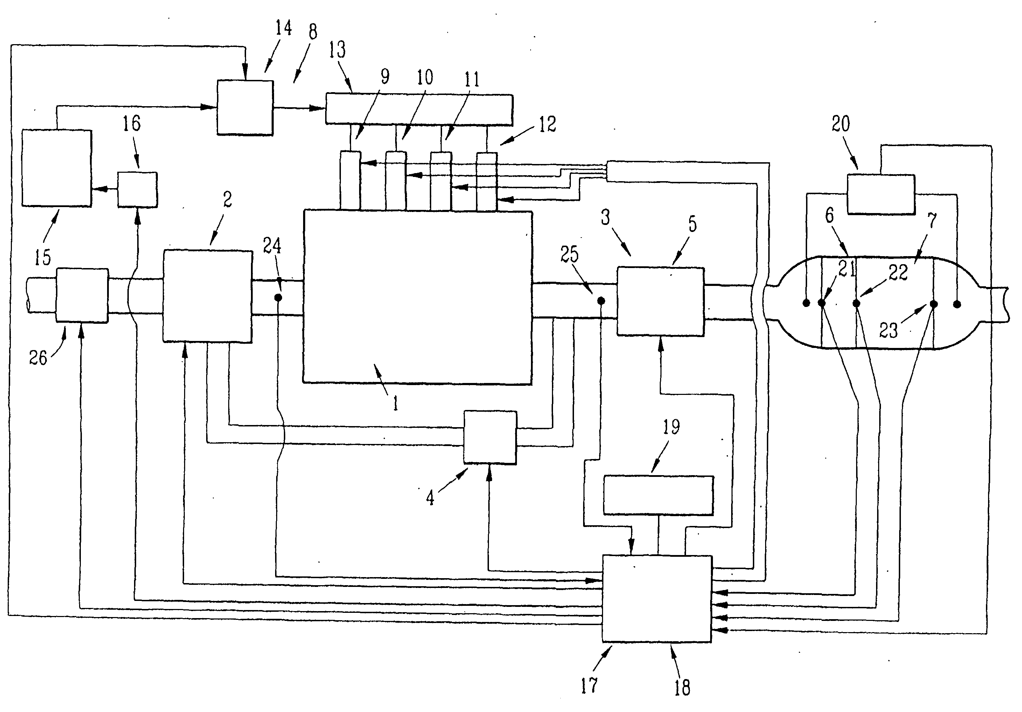

On a en effet représenté sur la figure 1, un moteur Diesel de véhicule automobile qui est désigné par la référence générale 1.

Ce moteur Diesel est associé à des moyens d'admission d'air en entrée de celui-ci, qui sont désignés par la référence générale 2.

En sortie, ce moteur est associé à une ligne d'échappement qui est désignée par la référence générale 3.

Des moyens de recyclage de gaz d'échappement du moteur en entrée de celui-ci sont également prévus et sont désignés par la référence générale 4.

Ces moyens sont alors interposés par exemple entre la sortie du moteur et les moyens 2 d'admission d'air dans celui-ci.

La ligne d'échappement peut également être associée à un turbocompresseur désigné par la référence générale 5 et plus particulièrement à la portion de turbine de celui-ci, de façon classique.

Enfin, la ligne d'échappement comporte un catalyseur d'oxydation désigné par la référence générale 6, disposé en amont d'un filtre à particules désigné par la référence générale 7, dans la ligne d 'échappement.

Le moteur est également associé à un système d'alimentation commune en carburant des cylindres de celui-ci. Ce système est désigné par la référence générale 8 sur cette figure et comporte par exemple des injecteurs à commande électrique associés à ces cylindres.

Dans l'exemple de réalisation représenté, le moteur est un moteur à quatre cylindres et comporte donc quatre injecteurs à commande électrique, respectivement 9,10,11 et 12.

Ces différents injecteurs sont associés à une rampe d'alimentation commune en carburant désignée par la référence générale 13 et reliée à des moyens d'alimentation en carburant désignés par la référence générale 14, comprenant par exemple une pompe à haute pression.

Ces moyens d'alimentation sont reliés à un réservoir de carburant désigné par la référence générale 15 et à des moyens d'ajout à ce carburant d'un additif destiné à se déposer sur le filtre à particules pour abaisser la température de combustion des particules piégées dans celui-ci.

En fait, cet additif peut par exemple être contenu dans un réservoir auxiliaire désigné par la référence générale 16 associé au réservoir de carburant 15, pour permettre l'injection d'une certaine quantité de cet additif dans le carburant.

Enfin, ce moteur et les différents organes qui viennent d'être décrits sont également associés à des moyens de contrôle de leur fonctionnement désignés par la référence générale 17 sur cette figure, comprenant par exemple un calculateur 18 associé à des moyens de stockage d'informations 19, et raccordé en entrée à différents moyens d'acquisition d'informations relatives à différents paramètres de fonctionnement de ce moteur et de ces organes, ce calculateur étant alors adapté pour contrôler le fonctionnement des moyens d'admission, des moyens de recyclage, du turbocompresseur et/ou du système d'alimentation pour piloter le fonctionnement du moteur et notamment le couple engendré par celui-ci en fonction des conditions de roulage du véhicule, de façon classique.

C'est ainsi par exemple que ce calculateur est relié à un capteur de pression différentielle 20 aux bornes du catalyseur et du filtre à particules, respectivement 6 et 7, et à des capteurs de température 21,22 et 23, respectivement en amont du catalyseur, entre ce catalyseur et le filtre à particules et en aval de ce filtre à particules dans la ligne d'échappement.

Le calculateur reçoit également une information de teneur en oxygène des gaz en entrée du moteur à partir d'une sonde Lambda λ proportionnelle désignée par la référence générale 24 sur cette figure, disposée en entrée du moteur.

Le calculateur peut également recevoir une information de teneur en oxygène des gaz d'échappement du moteur à partir d'une autre sonde Lambda λ proportionnelle 25 intégrée dans la ligne d'échappement de celui-ci.

En sortie, ce calculateur est adapté pour piloter les moyens d'admission d'air, les moyens de recyclage de gaz d'échappement, le turbocompresseur, les moyens d'ajout au carburant de l'additif, les moyens d'alimentation en carburant de la rampe commune et les différents injecteurs associés aux cylindres du moteur.

En particulier, ce calculateur est adapté pour déclencher une phase de régénération du filtre à particules par combustion des particules piégées dans celui-ci en enclenchant une phase d'injections multiples de carburant dans les cylindres du moteur pendant leur phase de détente.

Les particules émises par le moteur au cours de son fonctionnement sont en effet piégées dans le filtre à particules. Il convient alors de régénérer celui-ci régulièrement par combustion de ces particules.

Avantageusement, les moyens 4 de recyclage des gaz d'échappement du moteur en entrée de celui-ci comprennent une électrovanne proportionnelle qui est pilotée par les moyens de contrôle 17 en fonction des informations délivrées par la sonde Lambda λ proportionnelle 24, et éventuellement celles délivrées par la sonde Lambda 25, pour réguler le recyclage des gaz d'échappement en entrée du moteur en fonction de la teneur en oxygène des gaz en entrée du moteur, lors de la phase de régénération du filtre à particules.

Ceci permet alors notamment de mieux contrôler le déroulement de la régénération du filtre par combustion des particules.

Le calculateur 18 peut également être adapté pour piloter le fonctionnement du turbocompresseur 5 et plus particulièrement sa pression de consigne de suralimentation afin de réguler la teneur en oxygène des gaz en entrée du moteur et/ou le fonctionnement de moyens de contrôle 26 de la température des gaz en entrée du moteur comprenant par exemple tout échangeur approprié de façon classique, disposé en entrée du moteur.

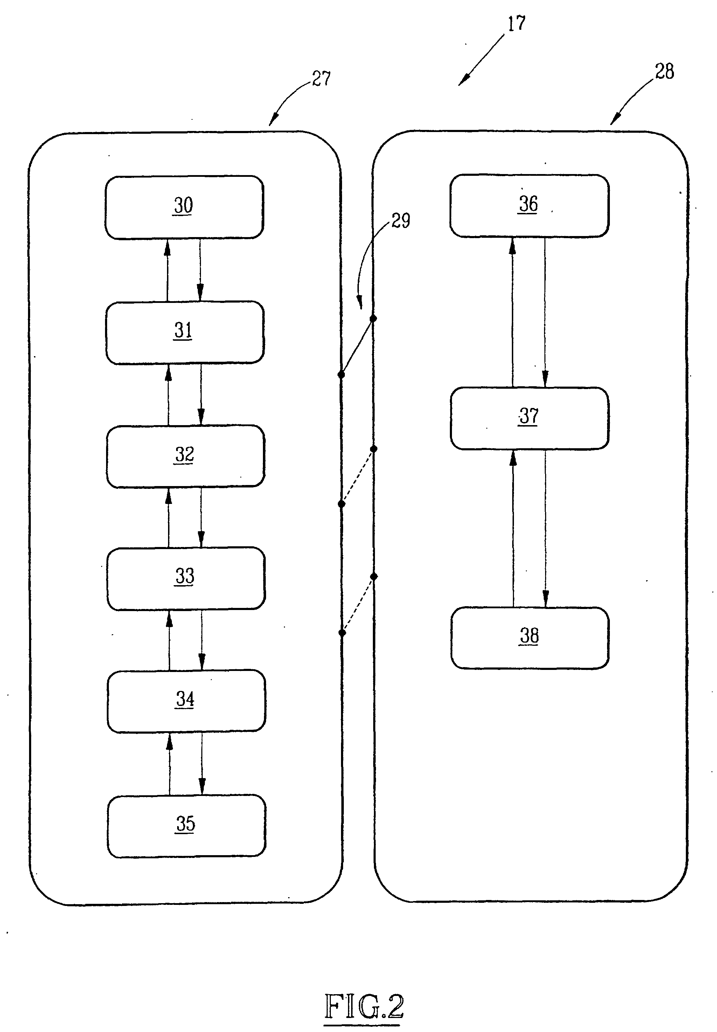

En fait, ce calculateur et de façon plus générale, les moyens de contrôle 17 se présentent comme cela est illustré sur la figure 2, sous la forme d'un superviseur à automates d'états synchronisés lors de transitions d'états, de type classique.

Dans l'exemple décrit, ce superviseur comporte au moins deux automates synchronisés, dont l'un est désigné par la référence générale 27 et l'autre par la référence générale 28.

Ces automates sont synchronisés lors de changements d'états comme cela est illustré en 29.

L'automate d'état 27 est associé à une fonction de détermination de l'état du filtre à particules, tandis que l'automate de gestion 28 est associé à une fonction de gestion et de pilotage du déclenchement et du deroulement de la phase de régénération du filtre à particules, c'est-à-dire de pilotage de l'aide à la régénération.

Cette structure a été développée pour surmonter les difficultés liées à la gestion d'un nombre important d'états notamment du filtre et de stratégies de pilotage du moteur, de même qu'un nombre important de transitions possibles entre ces différents états ou ces différentes stratégies.

Cette structure permet également d'obtenir une certaine cohérence facilitant la compréhension des principes de fonctionnement de ce superviseur et son évolution pour simplifier sa mise au point.

De plus, une telle structure peut être validée de façon automatisée par mise en oeuvre de tests unitaires, par rapport à des données expérimentales, etc.. , ce qui permet un gain de temps dans la mise au point et le respect des spécifications fonctionnelles.

Cette structure facilement adaptable notamment si l'on souhaite par exemple introduire un nouvel état du filtre ou une nouvelle stratégie de pilotage du moteur et de ses organes associés, permet d'obtenir une approche cohérente dans le gestion des différentes tâches.

Cependant, et pour réduire le nombre de transitions d'états dans ces automates, ces états sont ordonnés selon une structure séquentielle également appelée « en ascenseur ».

Les états de chaque automate sont donc ordonnés séquentiellement suivant l'évolution naturelle de la fonction correspondante.

C'est ainsi par exemple que pour l'automate d'état 27 de détermination de l'état du filtre à particules, ces différents états sont ordonnés par niveaux de colmatage croissants de celui-ci.

Pour évoluer de l'état 1 à l'état N, cet automate doit donc passer par tous les états intermédiaires.

Ainsi, le nombre de transitions entre deux états est réduit au minimum puisque par exemple une liaison directe entre l'état 1 et l'état 3, est équivalente à une succession de transitions d'états d'abord entre l'état 1 et l'état 2, puis entre l'état 2 et l'état 3.

Cette liaison directe peut donc être supprimée.

Lorsqu'une liaison directe entre deux états distants est nécessaire, par exemple pour des problèmes de gain de temps dans la transition, on peut bien entendu conserver cette liaison.

Un autre intérêt de cette approche par automates d'états est qu'elle permet une validation par simulation.

Celle-ci consiste alors à effectuer des tests unitaires automatisés en appliquant des séquences d'entrée choisies pour tester tous les modes de fonctionnement de l'automate correspondant, ou une analyse en simulation du comportement physique du moteur avec le filtre à particules, piloté par le superviseur.

On peut ainsi valider les spécifications fonctionnelles du superviseur.

A titre d'exemple, l'automate 27 de détermination de l'état du filtre à particules, présente six états différents.

Ces six états sont un état 30 de filtre à particules percé, un état 31 de filtre à particules régénéré, un état 32 de filtre à particules partiellement chargé, un état 33 de filtre à particules chargé, un état 34 de filtre à particules surchargé, et un état 35 de filtre à particules colmaté.

Ces différents états sont déterminés par exemple par analyse de la charge du filtre et comparaison de celle-ci à des seuils prédéterminés.

L'automate d'état 28 de contrôle du déclenchement et du déroulement de l'aide à la régénération comporte quant à lui par exemple trois états.

Ces états sont un premier état 36 correspondant à un fonctionnement sans aide à la régénération du filtre à particules, un deuxième état 37 d'aide à la régénération de premier niveau et un état 38 d'aide à la régénération de second niveau.

Bien entendu d'autres états peuvent être envisagés.

## Revendications

1. Système d'aide à la régénération d'un filtre à particules intégré dans une ligne d'échappement d'un moteur Diesel de véhicule automobile, comportant différents organes associés au moteur, parmi lesquels :
- des moyens (2) d'admission d'air dans le moteur,
- des moyens (4) de recyclage de gaz d'échappement du moteur en entrée de celui-ci,
- un turbocompresseur (5),
- un catalyseur d'oxydation (6) disposé en amont du filtre à particules (7) dans la ligne d'échappement ;
- un système (8) d'alimentation commune en carburant des cylindres du moteur, comportant des injecteurs à commande électrique (9,10,11,12), associés à ces cylindres,
- des moyens (16) d'ajout au carburant d'un additif destiné à se déposer sur le filtre à particules (7) pour abaisser la température de combustion des particules piégées dans celui-ci,
- des moyens (20,21,22,23,24) d'acquisition d'informations relatives à différents paramètres de fonctionnement du moteur et des organes associés à celui-ci, **caractérisé en ce qu'**il comporte des moyens (17) de contrôle du fonctionnement des moyens (2) d'admission, des moyens (4) de recyclage, du turbocompresseur (5) et/ou du système (8) d'alimentation pour piloter le fonctionnement du moteur, ces moyens étant en outre adaptés pour déclencher une phase de régénération du filtre à particules par combustion des particules piégées dans celui-ci en enclenchant une phase d'injections multiples de carburant dans les cylindres du moteur pendant leur phase de détente, et **en ce que** les moyens de contrôle (17) se présentent sous la forme d'un superviseur à automates d'états synchronisés lors de transitions d'états, dont au moins un premier automate (27) de détermination de l'état du filtre à particules et un second automate (28) de gestion et de pilotage du déclenchement et du déroulement de la phase d'aide à la régénération, les états de ces automates étant ordonnés séquentiellement.

2. Système selon la revendication 1, **caractérisé en ce que** le premier automate (27) de détermination de l'état du filtre à particules présente six états distincts dont un état (30) de filtre à particules percé, un état (31) de filtre à particules régénéré, un état (32) de filtre à particules partiellement chargé, un état (33) de filtre à particules chargé, un état (34) de filtre à particules surchargé et un état (35) de filtre à particules colmaté.

3. Système selon la revendication 1 ou 2, **caractérisé en ce que** le second automate (28) d'aide à la régénération du filtre présente trois états, dont un premier état (36) de fonctionnement sans aide à la régénération, un deuxième état (37) d'aide à la régénération de premier niveau et un troisième état (38) d'aide à la régénération de second niveau.

## Patentansprüche

1. Regenerationsunterstützungssystem für einen in die Abgasleitung eines Kraftfahrzeug-Dieselmotors integrierten Partikelfilter, das verschiedene Organe umfasst, die dem Motor zugeordnet sind, unter anderem:
- Mittel (2) für den Einlass von Luft in den Motor,
- Mittel (4) für die Rückführung von Abgasen des Motors zu dessen Einlass,
- einen Turbokompressor (5),
- einen Oxidationskatalysator (6), der in der Abgasleitung auf der Einlassseite des Partikelfilters (7) angeordnet ist;
- ein System (8) für die gemeinsame Versorgung der Zylinder des Motors mit Kraftstoff, das Einspritzeinrichtungen (9, 10, 11, 12) mit elektrischer Steuerung, die diesen Zylindern zugeordnet sind, umfasst,
- Mittel (16) für die Hinzufügung eines Additivs zu dem Kraftstoff, das dazu bestimmt ist, sich auf dem Partikelfilter (7) abzulagern, um die Verbrennungstemperatur der von diesem eingefangenen Partikel abzusenken,
- Mittel (20, 21, 22, 23, 24) für die Erfassung von Informationen bezüglich verschiedener Betriebsparameter des Motors und ihm zugeordneter Organe, **dadurch gekennzeichnet, dass** es Mittel (17) für die Steuerung der Funktion der Einlassmittel (2), der Rückführungsmittel (4), des Turbokompressors (5) und/oder des Versorgungssystems (8) umfasst, um den Betrieb des Motors zu steuern, wobei diese Mittel außerdem so beschaffen sind, dass sie eine Regenerationsphase des Partikelfilters durch Verbrennung der in ihm eingefangenen Partikel auslösen, indem sie eine Phase mehrfacher Kraftstoffeinspritzungen in die Zylinder des Motors während deren Expansion einfügen, und dass die Steuermittel (17) die Form einer Überwachungseinrichtung mit an ihren Zustandsübergängen synchronisierten Zustandsautomaten aufweisen, worunter sich wenigstens ein erster Automat (27) für die Bestimmung des Zustandes des Partikelfilters und ein zweiter Automat (28) für das Management und die Steuerung der Auslösung und des Ablaufs der Regenerationsunterstützungsphase befinden, wobei die Zustände dieser Automaten sequentiell geordnet sind.

2. System nach Anspruch 1, **dadurch gekennzeichnet, dass** der erste Automat (27) für die Bestimmung des Zustandes des Partikelfilters sechs verschiedene Zustände aufweist, worunter sich ein Zustand (30) eines durchgebrochenen Partikelfilters, ein Zustand (31) eines regenerierten Partikelfilters, ein Zustand (32) eines teilweise gefüllten Partikelfilters, ein Zustand (33) eines gefüllten Partikelfilters, ein Zustand (34) eines überfüllten Partikelfilters und ein Zustand (35) eines verstopften Partikelfilters befinden.

3. System nach Anspruch 1 oder 2, **dadurch gekennzeichnet, dass** der zweite Automat (28) für die Unterstützung der Regeneration des Filters drei Zustände aufweist, worunter sich ein erster Zustand (36) des Betriebs ohne Unterstützung der Regeneration, ein zweiter Zustand (37) der Unterstützung der Regeneration auf einem ersten Niveau und ein dritter Zustand (38) zur Unterstützung der Regeneration auf einem zweiten Niveau befinden.

## Claims

1. System for assisting regenerating a particle filter integrated into a motor vehicle diesel engine exhaust line, the system comprising units associated with the engine including:
- means (2) for admitting air into the engine,
- means (4) for recycling engine exhaust gas to the inlet of the engine,
- a turbocompressor (5),
- an oxidation catalytic converter (6) disposed in the exhaust line on the upstream side of the particle filter (7),
- a common system (8) for feeding fuel to the cylinders of the engine comprising electrical injectors (9, 10, 11, 12) associated with said cylinders,
- means (16) for adding to the fuel an additive adapted to be deposited in the particle filter (7) to lower the combustion temperature of particles trapped therein, and
- means (20, 21, 22, 23, 24) for acquiring information relating to operating parameters of the engine and the associated units, which system is **characterised in that** it comprises means (17) for controlling the operation of the admission means (2), the recycling means (4), the turbocompressor (5) and/or the feed system (8) to control the operation of the engine, said means being adapted to trigger a particle filter regeneration phase involving combustion of particles trapped in the filter by starting a phase of multiple injection of fuel into the cylinders of the engine during the expansion phase, and **in that** the control means (17) take the form of a supervisor with state automata synchronised to state transitions, including at least a first automaton (27) for determining the state of the particle filter and a second automaton (28) for managing and controlling triggering and execution of the regeneration assistance phase, the states of said automata being ordered sequentially.

2. System according to claim 1, **characterised in that** the first automaton (27) for determining the state of the particle filter has six separate states comprising a holed particle filter state (30), a regenerated particle filter state (31), a partially loaded particle filter state (32), a loaded particle filter state (33), an overloaded particle filter state (34), and a clogged particle filter state (35).

3. System according to claim 1 or claim 2, **characterised in that** the second automaton (28) for assisting filter regeneration has three states comprising a first state (36) of operation without regeneration assistance, a second state (37) of first level regeneration assistance, and a third state (38) of second level regeneration assistance.
